# EUROPEAN PATENT SPECIFICATION

(11) **EP 4 318 669 B1**
(45) Date of publication and mention of the grant of the patent: **04.03.2026**
(21) Application number: 23793977.2
(22) Date of filing: 11.01.2023
(51) Int. Cl.: H01M 4/36, H01M 4/131, H01M 4/133, H01M 4/134, H01M 4/38, H01M 4/505, H01M 4/525, H01M 4/58, H01M 10/0525, H01M 4/587, H01M 4/02

(54) **LITHIUM SECONDARY BATTERY WITH IMPROVED SAFETY**
LITHIUMSEKUNDÄRBATTERIE MIT VERBESSERTER SICHERHEIT
BATTERIE SECONDAIRE AU LITHIUM À SÉCURITÉ AMÉLIORÉE

(30) Priority: 25.04.2022 KR 20220050712
(43) Date of publication of application: 07.02.2024
(73) Proprietor: LG ENERGY SOLUTION, LTD., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/000486
(87) International publication number: WO 2023/210922

(56) References cited:
- EP-A1- 3 591 749
- EP-A1- 3 886 218
- EP-A1- 3 886 218
- CN-A- 110 071 292
- CN-B- 111 668 452
- JP-A- 2017 130 476
- KR-A- 20210 105 286
- KR-B1- 102 308 943
- US-A1- 2020 144 600

## Description

### [Technical Field]

The present invention relates to a lithium secondary battery with improved safety due to internal short circuit.

This application claims the benefit of priority based on Korean Patent Application No. 10-2022-0050712 filed on April 25, 2022.

### [Background Technology of the Invention]

Recently, secondary batteries have been widely applied not only to small devices such as portable electronic devices, but also to medium and large-sized devices such as battery packs or power storage devices of hybrid vehicles and electric vehicles.

Since high energy density is required to apply these secondary batteries to medium and large-sized devices, a ternary compound containing nickel (Ni), cobalt (Co), manganese (Mn), etc., specifically, LiNiₐCo_{b}Mn_{c}O₂ (0.6≤a≤0.9, a+b+c=1) with a nickel (Ni) content of 60% or more, lithium nickel metal oxides with a layered structure are used as a positive electrode active material to embody high capacity. However, lithium nickel metal oxide increases in capacity as the content of nickel (Ni) increases, but exhibits low chemical and structural stability, so an exothermic reaction is likely to occur. In particular, in the case of a lithium nickel metal oxide, it has a low on-set point, so once the exothermic reaction begins, it rapidly rises the temperature inside the battery, causing ignition, so there is a problem of low safety.

An exothermic reaction of the positive electrode active material may be induced when a short circuit flows inside the battery, that is, when an internal short circuit occurs. More specifically, the short-circuit current mainly occurs when a short circuit occurs inside the secondary battery due to penetration of a needle-like object or when a short circuit occurs in an electronic device connected to the secondary battery, and when a short circuit occurs in a lithium secondary battery, a rapid electrochemical reaction occurs at a positive electrode and a negative electrode. The heat generated in this way is conducted to surrounding materials, and the temperature of the secondary battery cell rapidly rises due to the conduction of this heat, resulting in ignition. In particular, in the case of a battery pack including a plurality of lithium secondary battery cells, heat generated in one cell propagates to surrounding cells and affects other cells, eventually causing the battery pack to ignite.

Therefore, there is a demand for the development of a battery that has a high energy density by including a lithium nickel metal oxide having a high nickel (Ni) content and has an improved safety problem due to internal short circuit.

### [Prior Art Documents]

### [Patent Document]

Korean Patent Publication No. 10-2020-0024980

Korean Patent Publication No. 10-2017-0004253

From EP 3 591 749 A1 and EP 3 886 218 A1 batteries according to the preamble of claim 1 are known. In addition, KR 102 308 943 B1 discloses a multi-layered anode in which the sphericity of the electroactive material is decreasing from the layers closest to the current collector to those nearer the surface of the electrode.

### [Description of the Invention]

### [Technical Problem]

Accordingly, the present invention is directed to provide a lithium secondary battery having a high energy density by including a ternary compound containing nickel (Ni) in a positive electrode and having safety issues due to internal short circuit improved, and a secondary battery module including the same.

### [Technical Solution]

To solve the above-mentioned problems,
In an exemplary embodiment, the present invention provides a lithium secondary battery, the lithium secondary battery, comprising:
a positive electrode;
a negative electrode; and
a separator disposed between the positive electrode and the negative electrode,
wherein the negative electrode comprises a negative electrode current collector, and a first negative electrode mixture layer to n^{th} negative electrode mixture layer (where n≥2) disposed on the negative electrode current collector,
wherein the first negative electrode mixture layer to n^{th} negative electrode mixture layers contain a first negative electrode active material including a carbon-based material and a second negative electrode active material including a silicon-based material,
wherein a content or a content ratio of the second negative electrode active material increases as the position of the individual negative electrode mixture layer changes from the first negative electrode mixture layer to the n^{th} negative electrode mixture layer and the second negative electrode active material has a degree of sphericity of 0.5 to 1.0, and the degree of sphericity decreases from the first negative electrode mixture layer to the nth negative electrode mixture layer.

Here, the carbon-based material may include one or more of soft carbon, hard carbon, natural graphite, artificial graphite, expanded graphite, non-graphitizable carbon, carbon black, acetylene black, ketjen black, carbon nanotube, fullerene, activated carbon, graphene, or carbon fiber.

In addition, the silicon-based material may include one or more of silicon (Si), silicon carbide (SiC), or silicon oxide (SiOq, wherein 0.8≤q≤2.5).

Moreover, the second negative electrode active material may be included in the negative electrode in an amount of 1 to 20wt% based on a total weight of the first to n^{th} negative electrode active materials.

Furthermore, the second negative electrode active material has a degree of sphericity of 0.5 to 1.0, and the degree of sphericity decreases as the position of the individual negative electrode mixture layer changes from the first negative electrode mixture layer to the n^{th} negative electrode mixture layer.

In addition, a total thickness of the first to n^{th} negative electrode mixture layers may be 50µm to 300µm.

Moreover, a thickness of the first negative electrode mixture layer may be 10% to 60% of the total thickness of the first to n^{th} negative electrode mixture layers.

In addition, the positive electrode comprises a positive electrode current collector, and a first positive electrode mixture layer to an m^{th} positive electrode mixture layer (where m≥2) disposed on the positive electrode current collector. And the first positive electrode mixture layer to the m^{th} positive electrode mixture layer may include a first positive electrode active material containing a lithium composite metal oxide represented by Formula 1 and a second positive electrode active material containing an iron phosphate compound represented by Formula 2 below:

[Formula 1] Liₓ[Ni_{y}Co_{z}Mn_{w}M¹ᵥ]O₂

[Formula 2] LiF eₐM²₁₋ₐXO₄

In the above Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more elements selected from the group consisting of P, Si, S, As, and Sb, and
a is 0≤a≤0.5.

Here, a content or the content ratio of the second positive electrode active material in each of the first to m^{th} positive electrode mixture layer may increase as the position of the individual positive electrode mixture layer changes from the first positive electrode mixture layer to the m^{th} positive electrode mixture layer.

In addition, the second positive electrode active material may be included in an amount of less than 10wt% based on the total weight of the first to m^{th} positive electrode mixture layers.

Moreover, a total thickness of the first to m^{th} positive electrode mixture layers may be 50µm to 300µm.

Furthermore, in an exemplary embodiment, the present invention provides a secondary battery module, the secondary battery module comprising the above-described lithium secondary battery according to the present invention.

### [Advantageous Effects]

A lithium secondary battery according to the present invention contains a ternary compound containing nickel (Ni), cobalt (Co), manganese (Mn), etc. as a positive electrode active material, and at the same time, contains a small amount of an iron phosphate compound and a silicon-based oxide in a positive electrode and a negative electrode, respectively, in the outermost part of a mixture layer adjacent to a separator, so it not only has an excellent energy density of the battery, but also has a relatively low electrical conductivity of the positive electrode surface and the negative electrode surface, so that the amount of short circuit current during an internal short circuit of the secondary battery can be reduced, thereby having an advantage of improving the safety due to an internal short circuit of the secondary battery.

### [Brief description of the drawings]

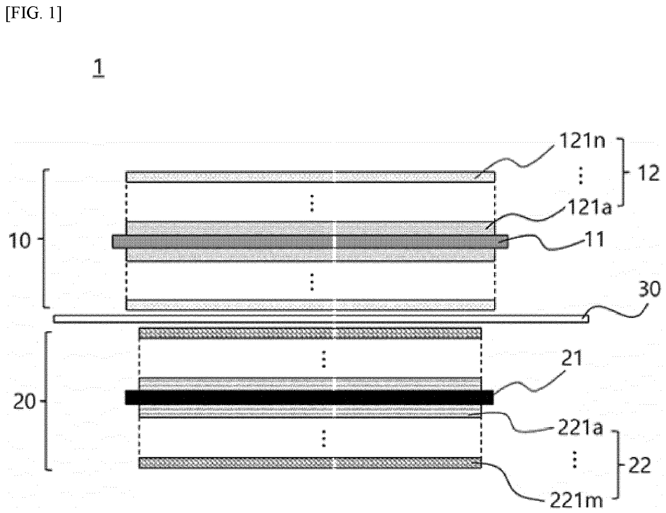

FIG. 1 is a cross-sectional view showing a structure of a lithium secondary battery according to the present invention.

### [Best Mode for Carrying Out the invention]

Since the present invention can apply various modifications and have various embodiments, specific exemplary embodiments will be exemplified in the diagrams and described in detail in the detailed description.

However, it should be understood that the present invention is not limited to specific embodiments, and includes all modifications, equivalents or alternatives within the technical scope of the present invention as defined in the claims.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate, etc. is disposed "on" another part, this includes not only a case in which one part is disposed "directly on" another part, but a case in which a third part is interposed therebetween. In contrast, when a part of a layer, a film, a region or a plate, etc. is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

Hereinafter, the present invention will be described in more detail.

### Lithium secondary battery

In an exemplary embodiment, the present invention provides a lithium secondary battery, the lithium secondary battery comprising:
a positive electrode,
a negative electrode, and
a separator disposed between the positive electrode and the negative electrode,
wherein the negative electrode comprises a negative electrode current collector, and a first negative electrode mixture layer to n^{th} negative electrode mixture layer (where n≥2) disposed on the negative electrode current collector,
wherein the first negative electrode mixture layer to n^{th} negative electrode mixture layer contain a first negative electrode active material including a carbon-based material and a second negative electrode active material including a silicon-based material,
a content or a content ratio of a second negative electrode active material increases as the position of the individual negative electrode mixture layer changes from the first negative electrode mixture layer to the n^{th} negative electrode mixture layer and the second negative electrode active material has a degree of sphericity of 0.5 to 1.0, and the degree of sphericity decreases from the first negative electrode mixture layer to the nth negative electrode mixture layer.

The lithium secondary battery according to the present invention includes an electrode assembly including a positive electrode, a negative electrode, and a separator disposed between the positive electrode and the negative electrode, and has a sealed structure after inserting the electrode assembly into a battery case and injecting an electrolyte composition.

The negative electrode includes a negative electrode mixture layer prepared by applying, drying, and pressing a slurry containing a negative electrode active material on a negative electrode current collector, and if necessary, the slurry may selectively further include a conductor, a binder, other additives, etc.

Here, the negative electrode includes a negative electrode current collector and a negative electrode mixture layer having a multi-layer structure in which two or more individual mixture layers are stacked on the negative electrode current collector.

Specifically, as shown in FIG. 1, the negative electrode mixture layer has a structure in which n (where n≥2) individual negative electrode mixture layers are stacked on the negative electrode current collector 11. Here, the negative electrode mixture layer stacked on the surface in contact with the negative electrode current collector 11 is a first negative electrode mixture layer 121a, and on the first negative electrode mixture layer 121a, a second negative electrode mixture layer to the n^{th} negative electrode mixture layer 121n are sequentially stacked so that n individual negative electrode mixture layers are positioned on the negative electrode current collector 11.

The number of layers is not particularly limited as long as the negative electrode mixture layer has a structure of two or more layers (where n≥2), but specifically it may be 2 to 10 layers; 2 to 8 layers; 2 to 6 layers; or 2 to 4 layers. By controlling the number of layers of the negative electrode mixture layer, the present invention may prevent a decrease in the manufacturing efficiency of the negative electrode, as well as easily control the internal composition of the negative electrode mixture layer depending on the position, for example, the negative electrode mixture layer adjacent to the positive electrode.

In addition, the negative electrode mixture layer may use a negative electrode active material commonly used in the art, but preferably may include a first negative electrode active material containing a carbon-based material along with a second negative electrode active material containing a silicon-based material.

Specifically, the first negative electrode active material may include one or more carbon-based materials such as a graphite having a graphene structure completely formed as in natural graphite, soft carbon having a low-crystalline graphene structure (structure in which hexagonal honeycomb planes of carbons are arranged in a layered form), and hard carbon, artificial graphite, expanded graphite, non-graphitizable carbon, carbon black, acetylene black, Ketjen black, carbon nanotube, fullerene, activated carbon, graphene, carbon nanotube, and the like in which these structures are mixed with amorphous portions.

In addition, the second negative electrode active material may include a silicon-based material including one or more among silicon (Si), silicon monoxide (SiO), and silicon dioxide (SiO₂). Here, when silicon monoxide (SiO) and silicon dioxide (SiO₂) are uniformly mixed or compounded to be included in the negative electrode mixture layer, the silicon-based material may be expressed as silicon oxide (SiO_{q}, where 0.8≤q≤2.5).

In addition, the entire negative electrode active material including both the first negative electrode active material and the second negative electrode active material may be included in an amount of 90 to 99 parts by weight based on the total weight of the negative electrode mixture layer, and specifically may be included in an amount of 92 to 98 parts by weight; or 95 to 99 parts by weight.

In addition, among them, the second negative electrode active material may be included in an amount of 1 to 20wt% based on the total weight of the negative electrode active material, and specifically may be included in an amount of 1 to 9 parts by weight, 3 to 7 parts by weight, 5 to 15 parts by weight, 11 to 19 parts by weight, or 13 to 17 parts by weight based on the total weight of the negative electrode active material. By adjusting the content of the second negative electrode active material within the above range, the present invention may minimize the rate of volume change of the battery, and may improve charging capacity per unit mass while reducing lithium consumption and irreversible capacity loss during initial charging and discharging of the battery.

Moreover, the first negative electrode active material and the second negative electrode active material are both included in n negative electrode active materials, and the content or the content ratio of the second negative electrode active material may increase as the position of the individual negative electrode mixture layer changes from the first negative electrode mixture layer in contact with the negative electrode current collector to the n^{th} negative electrode mixture layer most spaced apart from the negative electrode current collector.

As an example, the second negative electrode active material may be included in the first negative electrode mixture layer in an amount of 1 to 45wt% based on the total weight of the second negative electrode active material, and may be included in the second negative electrode mixture layer in an amount of 55 to 99wt% based on the total weight of the second negative electrode active material.

As another example, the second negative electrode active material may be included in the first negative electrode mixture layer in an amount of 1 to 10wt% based on the total weight of the second negative electrode active material, may be included in the second negative electrode mixture layer in an amount of 10 to 40wt% based on the total weight of the second negative electrode active material, and may be included in the third negative electrode mixture layer in an amount of 40 to 89wt% based on the total weight of the second negative electrode active material.

As another example, the second negative electrode active material may be included in the first negative electrode mixture layer in an amount of 1 to 5wt% based on the total weight of the second negative electrode active material, may be included in the second negative electrode mixture layer in an amount of 5 to 15wt% based on the total weight, may be included in the third negative electrode mixture layer in an amount of 15 to 30wt% based on the total weight, and may be included in the fourth negative electrode mixture layer in an amount of 30 to 79wt% based on the total weight.

The first negative electrode active material exhibits excellent electrical properties such as electrical conductivity by including a carbon-based material. However, when a short-circuit current flows inside the secondary battery, for example, when a short circuit occurs inside the secondary battery due to a penetration of a needle-like object, the carbon-based material with high electrical conductivity increases the amount of short circuit current between the positive electrode and the negative electrode, and accordingly, short circuit heat is significantly generated, thereby accelerating the exothermic reaction of the battery.

However, in the present invention, the second negative electrode active material including a silicon-based material having a relatively lower electrical conductivity than a carbon-based material increases in content or content ratio as it progresses from the innermost side to the outermost side of the negative electrode mixture layer, that is, from the first negative electrode mixture layer to the n^{th} negative electrode mixture layer, so it is possible to reduce the amount of short circuit current during an internal short circuit of the secondary battery, and through this, there is an advantage of reducing and/or delaying heat generation of the secondary battery.

In addition, as the second negative electrode active material progresses from the first negative electrode mixture layer to the n^{th} negative electrode mixture layer, the sphericity of the active material decreases.

Here, "sphericity" may mean the ratio of the longest diameter (major axis) to the shortest diameter (minor axis) among arbitrary diameters passing through the center of a particle, and when the sphericity is 1, it means that the shape of the particle is spherical. The sphericity may be measured through a particle shape analyzer.

Specifically, the second negative electrode active material has a sphericity of 0.5 to 1.0, and the sphericity decreases as it progresses from the first negative electrode mixture layer to the nth negative electrode mixture layer, thereby having a constant sphericity gradient.

As an example, the second negative electrode active material included in the first negative electrode mixture layer may have a sphericity of 0.8 to 1.0, and the second negative electrode active material included in the second negative electrode mixture layer may have a sphericity of 0.5 to 0.7.

As another example, the second negative active material included in the first negative electrode mixture layer may have a sphericity of 0.9 to 1.0, the second negative electrode active material included in the second negative electrode mixture layer may have a sphericity of 0.7 to 0.8, and the second negative electrode active material included in the third negative electrode mixture layer may have a sphericity of 0.5 to 0.6.

By controlling the sphericity of the second negative electrode active material to have a constant gradient according to the position of the negative electrode mixture layer including the second negative electrode active material, the present invention can reduce the electrical conductivity at the surface of the negative electrode mixture layer in contact with the separator without lowering the energy density of the negative electrode mixture layer.

Moreover, the total thickness of the negative electrode mixture layer is not particularly limited, but may be specifically 50µm to 300µm, more specifically 100µm to 200µm; 80µm to 150µm; 120µm to 170µm; 150µm to 300µm; 200µm to 300µm; or it may be 150µm to 190µm.

In addition, among the individual negative electrode mixture layers constituting the negative electrode mixture layer, the thickness of the first negative electrode mixture layer contacting the negative electrode current collector may be adjusted within a certain range. Specifically, the thickness of the first negative electrode mixture layer may be 10% to 60% of the total thickness of the negative electrode mixture layer, and more specifically, 10% to 40% of the total thickness of the negative electrode mixture layer; 30% to 50%; 10% to 20%; or 40% to 60%.

In the present invention, by adjusting the total thickness and individual thickness of the negative electrode mixture layer within the above range, it is possible to prevent the energy density of the electrode from being reduced, and to implement a high adhesive force between the negative electrode current collector and the negative electrode mixture layer.

Meanwhile, while the negative electrode mixture layer implements an adhesive force with the negative electrode current collector, it may include a binder so that the negative electrode active material, the conductor, other additives, etc. may bind to each other. Such binders include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, and the like, and one alone or a mixture of two or more thereof may be used. The binder may be included in an amount of 1 to 10 parts by weight based on the weight of the negative electrode mixture layer, specifically 2 to 8 parts by weight; or may be included in an amount of 1 to 5 parts by weight.

In addition, the negative electrode may include a negative electrode current collector having high conductivity without causing chemical change in the battery. For example, as the negative electrode current collector, copper, stainless steel, nickel, titanium, calcined carbon, etc. may be used, and in the case of copper or stainless steel, ones that are surface-treated with carbon, nickel, titanium, silver, etc. may be used. In addition, the negative electrode current collector may form micro/nano-scale unevenness on the surface to enhance bonding strength with the negative electrode active material, and various forms such as films, sheets, foils, nets, porous bodies, foams, and nonwoven fabrics are possible. Moreover, the average thickness of the negative electrode current collector may be appropriately applied in the range of 3 to 500µm in consideration of the conductivity and the total thickness of the negative electrode to be manufactured.

Furthermore, the positive electrode comprises a positive electrode current collector, and m (where m≥2) positive electrode mixture layers disposed on the positive electrode current collector. The first positive electrode mixture layer to m^{th} positive electrode mixture layers may include a first positive electrode active material containing lithium composite metal oxide represented by Formula 1 and a second cathode active material containing an iron phosphate compound represented by Formula 2 below:

[Formula 1] Liₓ[Ni_{y}Co_{z}Mn_{w}M¹ᵥ]O₂

[Formula 2] LiF eₐM²₁₋ₐXO₄

In the above Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more elements selected from the group consisting of P, Si, S, As, and Sb, and
a is 0≤a≤0.5.

In this case, the positive electrode includes a multi-layer positive electrode mixture layer in which two or more (m≥2) individual positive electrode mixture layers are stacked on the positive electrode current collector.

Specifically, as shown in FIG. 1, the positive electrode mixture layer has a structure in which m (where m≥2) individual positive electrode mixture layers are stacked on a positive electrode current collector. Here, the positive electrode mixture layer stacked on the surface contacting the positive electrode current collector is a first positive electrode mixture layer, and the second positive electrode mixture layer to the m^{th} positive electrode mixture layer are sequentially stacked on the first positive electrode mixture layer so that m individual positive electrode mixture layers are disposed on the positive electrode current collector.

The number of layers is not particularly limited as long as the positive electrode mixture layer has a structure of two or more layers (where m≥2), but specifically, it may be 2 to 10 layers; 2 to 8 layers; 2 to 6 layers; or it may be a 2 to 4 layers. By controlling the number of layers of the positive electrode mixture layer within the above range, the present invention may improve the energy density of the electrode, while preventing a decrease in the manufacturing efficiency of the positive electrode, and at the same time, may effectively discharge heat generated during charging and discharging of the battery to the outside.

In addition, the positive electrode mixture layer is prepared by applying, drying, and pressing a slurry containing a positive electrode active material capable of reversible intercalation and deintercalation of lithium ions during charging and discharging of the battery, and different types of the positive electrode active material may be included in each layer.

Specifically, the positive electrode according to the present invention has a configuration including a first positive electrode active material including a lithium composite metal oxide represented by Formula 1 in a positive electrode mixture layer.

And the second positive electrode mixture layer to the m^{th} positive electrode mixture layer disposed on the first positive electrode mixture layer and spaced apart from the positive electrode current collector, further includes a second positive electrode active material including an iron phosphate compound represented by Formula 2:

[Formula 1] Liₓ[Ni_{y}Co_{z}Mn_{w}M¹ᵥ]O₂

[Formula 2] LiFeₐM²₁₋ₐXO₄

In the above Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more elements selected from the group consisting of P, Si, S, As, and Sb, and
a is 0≤a≤0.5.

Lithium composite metal oxide represented by Formula 1 is a ternary lithium oxide containing nickel (Ni), cobalt (Co) and manganese (Mn) as main components, and has high energy density, so it is advantageous in that it is suitable for electric vehicles (EVs) in terms of performance such as output, etc. and for medium and large-sized secondary batteries for power storage such as Energy Storage Systems (ESS). However, although the lithium composite metal oxide increases in capacity as the content of nickel (Ni) increases, it exhibits low chemical and structural stability, so an exothermic reaction is likely to occur, and accordingly, there is a problem in that the possibility of ignition occurring is high.

The exothermic reaction may be induced when a short circuit current flows inside the battery, that is, when an internal short-circuit occurs. In general, the short-circuit current of a battery occurs when a short-circuit inside the secondary battery due to penetration of a needle-like object occurs or when a short-circuit in an electronic device connected to the secondary battery occurs.

Accordingly, by including a lithium composite metal oxide represented by Formula 1 as the first positive electrode active material throughout the multi-layer positive electrode mixture layer, and further includes an iron phosphate compound represented by Formula 2 in the second to the m^{th} positive electrode mixture layers spaced apart from the positive electrode current collector as the second positive electrode active material, the present invention can distribute the first positive electrode active material, which generates heat during charging and discharging of the battery, to a position adjacent to the positive electrode current collector, where heat can be easily transferred to the outside, thereby improving the heat resistance of the positive electrode. Not only that, the volume of the second positive electrode active material shrinks in the overcharging voltage of about 4.5V or higher as lithium escapes. As a result, the internal conductive path is quickly blocked to implement an insulation effect, and compared to the first positive electrode active material, the second positive electrode active material has a relatively low electrical conductivity, so the occurrence of short circuit heat can be suppressed because an increase in the amount of short circuit current on the surface of the positive electrode mixture layer can be prevented in the event of an internal short circuit, and the rigidity of the positive electrode surface can be increased due to the second positive electrode active material. Therefore, it is possible to reduce the risk of internal short circuit due to an external force or a penetration of a needle-like object.

Here, the first positive electrode active material containing the lithium composite metal oxide represented by Formula 1 is a metal oxide containing nickel (Ni), cobalt (Co), and manganese (Mn) together with lithium, and in some cases, may have a form doped with another transition metal (M¹). In a specific example, more specifically, the lithium composite metal oxide may include one or more selected from the group consisting of Li(Ni_{0.6}Co_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, and Li(Ni_{0.7}Co_{0.1}Mn_{0.1}Zr_{0.1})O₂.

The particle size of the first positive electrode active material is not particularly limited, but may specifically have an average particle size of 0.5 to 5µm, more specifically 0.8 to 1.5µm; 1.0 to 3.0µm; 1.2 to 1.8µm; or it may have an average particle size of 1.5 to 2.5µm.

In addition, the iron phosphate compound represented by Formula 2 is a lithium phosphate containing iron, and in some cases, may have a form doped with another transition metal (M²). For example, the iron phosphate compound may include LiFePO₄, LiFe_{0.8}Mn_{0.2}PO₄, LiFe_{0.5}Mn_{0.5}PO₄, and the like.

The second positive electrode active material may have an average particle size of 0.5 to 5µm, specifically 0.5 to 1.0µm; 0.8 to 1.2µm; 1.0 to 2.0µm; 1.5 to 3.0µm; 2.0 to 3.0µm; or it may have an average particle size of 2.5 to 4.0µm.

Moreover, the average particle size of the second positive electrode active material included in the positive electrode mixture layer may tend to increase as the position of the individual positive electrode mixture layer changes from the second positive electrode mixture layer to the m^{th} positive electrode mixture layer.

Specifically, the second positive electrode active material included in the second positive electrode mixture layer may have an average particle size of 0.5 to 1.2µm, and the second positive electrode active material included in the m^{th} positive electrode mixture layer (where m≥2) may have an average particle size of 1.3 to 3.0µm.

As an example, the second positive electrode active material included in the second positive electrode mixture layer may have an average particle size of 0.8 to 1.0µm, and the second positive electrode active material included in the third positive electrode mixture layer may have an average particle size of 1.2 to 1.5µm.

As another example, the second positive electrode active material included in the second positive electrode mixture layer may have an average particle size of 0.6 to 0.8µm, the second positive electrode active material included in the third positive electrode mixture layer may have an average particle size of 1.5 to 1.8µm, and the second positive electrode active material included in the fourth positive electrode mixture layer may have an average particle size of 2.0 to 2.2µm.

By letting the average particle size of the second positive electrode active material increase as the position of the individual positive electrode mixture layers changes from the second positive electrode mixture layer to the m^{th} positive electrode mixture layer, the positive electrode of the present invention can further increase the rigidity of the positive electrode surface.

In addition, the second positive electrode active material may be included in an amount of less than 10wt% based on the total weight of the positive electrode mixture layer, specifically may be included in an amount of 0.1 to 9.9wt% based on the total weight of the positive electrode mixture layer; 0.5 to 8.0wt%; 0.5 to 6.0wt%; 0.1 to 5.0wt%; 0.1 to 3.0wt%; 1.0 to 3.0wt%; 2.5 to 5.0wt%; 4.0 to 8.0wt%; or 6.0 to 9.9wt%.

Moreover, the second positive electrode active material containing an iron phosphate compound represented by Formula 2 may be included in each positive electrode mixture layer in an amount of 0.5 to 20wt% based on the weight of each positive electrode mixture layer, and specifically may be included in an amount of 1 to 18wt% based on the weight of each positive electrode mixture layer; 1 to 15wt%; 1 to 12wt%; 1 to 10wt%; 1 to 8wt%; 1 to 5wt%; 0.5 to 1wt%; 0.5 to 5wt%; 2 to 6wt%; 0.5 to 0.9wt%; 5 to 16wt%; 7 to 15wt%; or 8 to 12wt%.

By controlling the content of the second positive electrode active material within the above range with respect to the weight of the entire positive electrode mixture layer and individual positive electrode mixture layers, the positive invention can prevent insufficient implementation of rigidity on the positive electrode surface due to an insignificant content, while preventing deterioration in electrical performance of the battery due to an increase in electrode resistance on the positive electrode surface by an excessive amount of the second positive electrode active material.

Furthermore, while the second positive electrode active material is included in the second positive electrode mixture layer to the m^{th} positive electrode mixture layer, its content or content ratio may tend to increase as the position changes from the second positive electrode mixture layer in contact with the first positive electrode mixture layer to the m^{th} positive electrode mixture layer that is most spaced apart from the first positive electrode mixture layer. The second positive electrode active material exhibits a relatively slow oxidation-reduction reaction compared to the first positive electrode active material in the event of battery overheating or short circuit, so by letting the concentration to increase as it gets closer to the outermost side of the positive electrode mixture layer, there is an advantage in that the possibility of fire or explosion is lowered when the battery is short-circuited.

Meanwhile, the positive electrode for a lithium secondary battery according to the present invention may further include a conductor, a binder, other additives, etc. in the positive electrode mixture layer, if necessary.

In this case, the first and second positive electrode active materials contained in each positive electrode mixture layer may be included in an amount of 85 parts by weight or more, specifically, 90 parts by weight or more, 93 parts by weight or more, or 95 parts by weight or more based on the weight of each positive electrode mixture layer.

In addition, the conductor is used to improve the electrical performance of the positive electrode, and those commonly used in the art can be applied, but specifically, may include one or more selected from the group consisting of natural graphite, artificial graphite, carbon black, acetylene black, and Denka black, ketjen black, Super-P, channel black, furnace black, lamp black, thermal black, graphene, and carbon nanotube.

Moreover, the conductor may be included in an amount of 0.1 to 5 parts by weight based on the weight of each positive electrode mixture layer, specifically may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to bind the positive electrode active material, the positive electrode additive, and the conductor to each other, and any binder having such a function may be used without particular limitation. Specifically, the binder may include one or more resins selected from the group consisting of polyvinylidene fluoride-hexafluoropropylene copolymer (PVdF-co-HFP); polyvinylidenefluoride (PVdF), polyacrylonitrile, polymethylmethacrylate, and copolymers thereof. As one example, the binder may include polyvinylidenefluoride.

Moreover, the binder may be included in an amount of 1 to 10 parts by weight based on the weight of each positive electrode mixture layer, specifically 2 to 8 parts by weight; or may include 1 to 5 parts by weight.

In addition, the total thickness of the positive electrode mixture layer is not particularly limited, but may be specifically 50µm to 300µm, more specifically 100µm to 200µm; 80µm to 150µm; 120µm to 170µm; 150µm to 300µm; 200µm to 300µm; or 150µm to 190µm.

Also, among the individual positive electrode mixture layers constituting the positive electrode mixture layer, the thickness of the first positive electrode mixture layer contacting the positive electrode current collector may be adjusted within a certain range. Specifically, the thickness of the first positive electrode mixture layer may be 10% to 60% of the total thickness of the positive electrode mixture layer, and more specifically, 10% to 40% of the total thickness of the positive electrode mixture layer; 30% to 50%; 10% to 20%; or 40% to 60%.

In the present invention, by adjusting the total thickness and individual thickness of the positive electrode mixture layer within the above range, it is not only possible to prevent the energy density of the electrode from being reduced, but also to display high adhesive force between the positive electrode current collector and the positive electrode mixture layer.

Furthermore, the positive electrode current collector provided in the positive electrode may be one having high conductivity without causing chemical change in the battery. For example, stainless steel, aluminum, nickel, titanium, calcined carbon, etc. may be used, and in the case of aluminum or stainless steel, ones that are surface-treated with carbon, nickel, titanium, silver, etc. may also be used.

In addition, the average thickness of the current collector may be appropriately adjusted in the range of 5 to 500µm in consideration of the conductivity and total thickness of the positive electrode to be manufactured.

Meanwhile, the separator is interposed between a positive electrode and a negative electrode, and an insulating thin film having high ion permeability and mechanical strength is used. The separator is not particularly limited as long as it is commonly used in the art, but specifically, chemical resistant and hydrophobic polypropylene; glass fiber; alternatively, a sheet or non-woven fabric made of polyethylene, etc. may be used. In some cases, a composite separator in which inorganic particles/organic particles with an organic binder polymer are coated on a porous polymer substrate such as the sheet or non-woven fabric may be used. When a solid electrolyte such as a polymer is used as the electrolyte, the solid electrolyte may serve as a separator. In addition, the separator may have an average pore diameter of 0.01 to 10µm and an average thickness of 5 to 300µm.

In addition, the electrolyte composition may include an organic liquid electrolyte, an inorganic liquid electrolyte, a solid polymer electrolyte, a gel polymer electrolyte, a solid inorganic electrolyte, a molten inorganic electrolyte, etc. that can be used during manufacture of a lithium secondary battery, but is not limited thereto.

Specifically, the electrolyte may include an organic solvent and a lithium salt.

The organic solvent may be used without particular limitation as long as it can serve as a medium through which ions involved in the electrochemical reaction of the battery can move. For example, as the organic solvent, ester-based solvents such as methyl acetate, ethyl acetate, γ-butyrolactone, ε-caprolactone, etc.; ether-based solvents such as dibutyl ether or tetrahydrofuran, etc. ; ketone-based solvents such as cyclohexanone, etc. ; aromatic hydrocarbon-based solvents such as benzene, fluorobenzene, etc.; carbonate-based solvents such as dimethylcarbonate (DMC), diethylcarbonate (DEC), methylethylcarbonate (MEC), ethylmethylcarbonate (EMC), ethylene carbonate (EC), propylenecarbonate (PC), etc., nitriles such as R-CN (R is a linear, a branched, or a cyclic hydrocarbon group of C2 to C20, and may include a double bond aromatic ring or an ether bond), etc.; amides such as dimethylformamide, etc.; dioxolanes such as 1,3-dioxolane; or sulfolanes, etc. may be used. Among the above, carbonate-based solvents are preferred, and a mixture of cyclic carbonates (e.g., ethylene carbonate or propylene carbonate, etc.) having a high ionic conductivity and a high dielectric constant capable of increasing the charging/discharging performance of the battery, and low-viscosity linear carbonate-based compounds (e.g., ethylmethylcarbonate, dimethylcarbonate, or diethylcarbonate, etc.) are more preferable. In this case, when the cyclic carbonate and the chain carbonate are mixed and used in a volume ratio of about 1:1 to 9, the performance of the electrolyte may be excellent.

In addition, the lithium salt may be used without particular limitation as long as it is a compound capable of providing lithium ions used in the lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, etc. may be used.

Moreover, the concentration of the lithium salt may be used within the range of 0.1M to 2.0M. When the concentration of the lithium salt is within the above range, the electrolyte has appropriate conductivity and viscosity, so an excellent electrolyte performance can be exhibited, and lithium ions can move effectively.

In the electrolyte, besides the above electrolyte components, for the purpose of improving the lifespan characteristics of the battery, suppressing the decrease in battery capacity, and improving the discharge capacity of the battery, for example, one or more additives such as pyridine, triethyl phosphite, triethanolamine, cyclic ether, ethylene diamine, n-glyme, hexaphosphoric acid triamide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol, or aluminum trichloride etc. may be further included. Here, the additive may be included in an amount of 0.1 to 5wt% based on the total weight of the electrolyte.

As described above, since the lithium secondary battery including the positive electrode according to the present invention stably exhibits excellent discharge capacity, output characteristics, and capacity retention rate, it is useful in portable devices such as mobile phones, laptops, digital cameras, and electric vehicles such as hybrid electric vehicles (HEVs), etc.

Furthermore, the lithium secondary battery according to the present invention is not limited in appearance depending on the use of the battery, and its shape may be adopted by a case commonly used in the art. For example, the lithium secondary battery may be a battery including a cylindrical or a prismatic battery case using a can, or a pouch-type or a coin-type battery case.

As an example, the lithium secondary battery may be a prismatic secondary battery including a prismatic can as the battery case.

### Secondary battery module

Furthermore, in an exemplary embodiment, the present invention provides a secondary battery module including the lithium secondary battery according to the present invention described above.

The secondary battery module according to the present invention not only has an excellent electrical performance by including the above-described lithium secondary battery of the present invention as a unit battery, but also has an excellent safety against internal short circuit, so it can be used as a power source for medium and large-sized devices that require high temperature stability, long cycle characteristics and high-rate characteristics, etc.

Specific examples of such medium and large-sized devices include a power tool powered by an electrical motor; electric vehicles including electric vehicles (EV), hybrid electric vehicles (HEVs), plug-in hybrid electric vehicles (PHEVs), and the like; electric two-wheeled vehicles including E-bikes and Escooters; electric golf carts; and power storage systems, and more specifically, may include hybrid electric vehicles (HEVs), but is not limited thereto.

### [Mode for Carrying Out the invention]

Hereinafter, the present invention will be described in more detail by Examples and Experimental Examples.

However, the following Examples and Experimental Examples are merely illustrative of the present invention, and the contents of the present invention are not limited to the following examples.

### Examples 1 to 10 and Comparative Examples 1 to 4. Preparation of lithium secondary battery

### a) Preparation of negative electrode

Water was injected into a homo mixer, and a carbon-based material in which natural graphite and artificial graphite are mixed at a weight ratio of 1:1 as a first negative electrode active material; SiO_{q} (where 0.9≤q≤2.2) as a second negative electrode active material; and styrene butadiene rubber (SBR) were injected, respectively. Then, the mixture was mixed at 2500 rpm for 80 minutes to prepare a slurry for forming a first negative electrode mixture layer, a slurry for forming a second negative electrode mixture layer, and a slurry for forming a third negative electrode mixture layer, respectively.

Here, the slurry prepared to form each negative electrode mixture layer was prepared so that it includes 98.5wt% of a negative electrode active material and 1.5wt% of a binder. In addition, ① the sphericity of the second negative electrode active material (SiO_{q}) and ② the content ratios (unit: parts by weight) of the first negative electrode active material and the second negative electrode active material with respect to the total 150 parts by weight of the negative electrode active material were adjusted as shown in Table 1.

A copper thin sheet (average thickness: 12 µm) was prepared as a negative electrode current collector, and the prepared slurries for forming the first to the third negative electrode mixture layer were sequentially cast on the prepared copper thin sheet. The slurry-cast copper thin sheet was dried in a vacuum oven at 130°C, and was rolled to prepare a negative electrode. Here, the total thickness of the rolled negative electrode mixture layer was 140µm, and the thickness of individual negative electrode mixture layer was adjusted to be the same.

**[Table 1]**

| | Numb er of layers | First negative electrode mixture layer | | | Second negative electrode mixture layer | | | Third negative electrode mixture layer | | |
|---|---|---|---|---|---|---|---|---|---|---|
| | | Graphi te content | SiO_{q} conte nt | Spherici ty | Graphi te content | SiO_{q} conte nt | Spherici ty | Graphi te content | SiO_{q} conte nt | Spherici ty |
| Negati ve electro de structur e 1 | 2 | 70 | 5 | 0.9 | 65 | 10 | 0.75 | - | - | - |
| Negati ve electro de structur e2 | 3 | 49.7 | 0.3 | 0.9 | 49.5 | 0.5 | 0.75 | 49.3 | 0.7 | 0.6 |
| Negati ve electro de structur e3 | 3 | 47 | 3 | 0.9 | 45 | 5 | 0.75 | 43 | 7 | 0.6 |
| Negati ve electro de structur e4 | 3 | 44 | 6 | 0.9 | 40 | 10 | 0.75 | 36 | 14 | 0.6 |
| Negati ve electro de structur e5 | 3 | 41 | 9 | 0.9 | 35 | 15 | 0.75 | 29 | 21 | 0.6 |
| Negati ve electro de structur e 6 | 3 | 47 | 3 | 0.9 | 45 | 5 | 0.9 | 43 | 7 | 0.9 |
| Negati ve electro de structur e7 | 1 | 150 | - | - | - | - | - | - | - | - |
| Negati ve electro de structur e8 | 1 | 135 | 15 | 0.9 | - | - | - | - | - | - |

### b) Preparation of positive electrode

N-methylpyrrolidone solvent was injected into a homo mixer, and LiNi_{0.8}Co_{0.1}Mn_{0.1}O₂ (hereinafter, 'NCM', average particle size: approx. 2µm) as a first positive electrode active material, LiFePO₄ (hereinafter, 'LFP') as a second positive electrode active material, carbon black as a conductor, and polyvinylidene fluoride (PVdF) as a binder were injected, respectively. Then, the mixture was mixed at 3,000rpm for 60 minutes to prepare a slurry for forming a first positive electrode mixture layer, a slurry for forming a second positive electrode mixture layer, and a slurry for forming a third positive electrode mixture layer, respectively.

Here, the slurry prepared to form each positive electrode mixture layer was prepared to include 97wt% of the positive electrode active material, 2wt% of the conductor, and 1wt% of the binder based on solid content. In addition, ① the average particle size (unit: µm) of the second positive electrode active material, and ② the content ratios (unit: parts by weight) of the first positive electrode active material and the second positive electrode active material included in each slurry with respect to the total 150 parts by weight of the positive electrode active material were adjusted as shown in Table 2.

A positive electrode was prepared by preparing an aluminum thin sheet (average thickness: 14µm) as a positive electrode current collector, sequentially casting the prepared slurries for forming the first to the third positive electrode mixture layers on the prepared aluminum thin sheet, drying in a vacuum oven at 130°C, and rolling it. Here, the total thickness of the rolled positive electrode mixture layer was 150µm, and the thickness of individual positive electrode mixture layer was adjusted to be the same.

**[Table 2]**

| | Number of layers | First positive electrode mixture layer | Second positive electrode mixture layer | | | Third positive electrode mixture layer | | |
|---|---|---|---|---|---|---|---|---|
| | | NCM content | NCM content | LFP content | LFP particle size | NCM content | LFP content | LFP particle size |
| Positive electrode structure 1 | 2 | 75 | 67.5 | 7.5 | 1.5 | - | - | - |
| Positive electrode structure 2 | 3 | 50 | 47.5 | 2.5 | 0.8 | 45 | 5 | 1.5 |
| Positive electrode structure 3 | 3 | 50 | 42.5 | 7.5 | 0.8 | 35 | 15 | 1.5 |
| Positive electrode structure 4 | 3 | 50 | 47.5 | 2.5 | 1.5 | 45 | 5 | 1.5 |
| Positive electrode structure 5 | 1 | 150 | - | - | - | - | - | - |

### c) Assembly of secondary battery

As shown in Table 3 below, an electrode assembly was prepared by facing the positive and negative electrodes prepared in advance, respectively, and interposing a separator made of 18µm polypropylene therebetween. A prismatic lithium secondary battery was prepared by inserting each of the prepared electrode assemblies into a prismatic battery case, injecting an electrolyte composition into the battery case, and sealing the case. Here, as the electrolyte composition, a solution in which lithium hexafluorophosphate (LiPF₆, 1.0M) and vinyl carbonate (VC, 2wt%) were mixed into a mixture of ethylene carbonate (EC): dimethyl carbonate (DMC): diethyl carbonate (DEC)=1:1:1 (volume ratio) was used.

**[Table 3]**

| | Negative electrode structure | Positive electrode structure |
|---|---|---|
| Example 1 | Structure 1 | Structure 2 |
| Example 2 | Structure 2 | Structure 2 |
| Example 3 | Structure 3 | Structure 2 |
| Example 4 | Structure 4 | Structure 2 |
| Example 5 | Structure 5 | Structure 2 |
| Example 6 | Structure 6 | Structure 2 |
| Example 7 | Structure 3 | Structure 1 |
| Example 8 | Structure 3 | Structure 3 |
| Example 9 | Structure 3 | Structure 4 |
| Example 10 | Structure 3 | Structure 5 |
| Comparative Example 1 | Structure 7 | Structure 2 |
| Comparative Example 2 | Structure 7 | Structure 5 |
| Comparative Example 3 | Structure 8 | Structure 2 |
| Comparative Example 4 | Structure 8 | Structure 5 |

Example 6 does not form part of the present invention.

### Experimental Example.

In order to evaluate the performance and safety a lithium secondary battery according to the present invention, the following experiments were performed.

### a) Evaluation of secondary battery output

The lithium secondary batteries prepared in Examples and Comparative Examples were fully charged at room temperature (22°C) at a 0.1C-rate. Then, the initial discharge capacity was measured while discharging the fully charged lithium secondary batteries at 0.1C-rate. After that, each lithium secondary battery was fully charged again at 0.1C-rate, and while discharging at 1.0C, 2.0C, 5.0C, and 9.0C-rates, respectively, the relative discharge capacity ratio based on the initial discharge capacity for each discharge rate was calculated, and the results were shown in Table 4 below.

### b) Evaluation of nail penetration test

For the lithium secondary batteries prepared in Examples and Comparative Examples, charging and discharging cycles at a current value of 0.5C were repeated twice in a voltage range of 4.2V to 2.0V in an environment of 25°C. Then, after charging each of the lithium secondary batteries to 4.2V, whether ignition occurred was evaluated when a metal body with a diameter of 3mm was dropped at a rate of 80mm/sec to penetrate the cell in the same way as the PV8450 certification conditions, and the results were shown in Table 5.

### c) Evaluation of impact test

The lithium secondary batteries prepared in Examples and Comparative Examples were fully charged at 0.1C-rate at room temperature (22°C). Then, a secondary battery impact test according to the UN1642DL impact certification standard was performed on the fully charged lithium secondary batteries. Here, the weight of the weight used was 9kg, and the experiment was performed by dropping it on a round bar having a diameter of 16mm placed in a secondary battery cell. The results were shown in Table 5 below.

**[Table 4]**

| | Ratio of relative discharge capacity to C rate discharge capacity [%] | | | |
|---|---|---|---|---|
| | 1.0C | 2.0C | 5.0C | 9.0C |
| Example 1 | 99.2 | 96.8 | 90.5 | 80.5 |
| Example 2 | 99.0 | 96.6 | 89.3 | 80.1 |
| Example 3 | 99.4 | 97.1 | 91.4 | 81.4 |
| Example 4 | 99.5 | 97.2 | 91.8 | 81.6 |
| Example 5 | 99.7 | 97.6 | 92.3 | 82.4 |
| Example 6 | 99.3 | 97.0 | 91.0 | 80.7 |
| Example 7 | 99.2 | 96.9 | 89.9 | 79.8 |
| Example 8 | 99.6 | 96.7 | 90.2 | 80.2 |
| Example 9 | 99.2 | 96.7 | 89.8 | 79.5 |
| Example 10 | 99.9 | 95.2 | 91.8 | 83.4 |
| Comparative Example 1 | 99.0 | 96.2 | 87.5 | 72.9 |
| Comparative Example 2 | 99.1 | 96.9 | 88.7 | 79.5 |
| Comparative Example 3 | 99.2 | 96.1 | 90.1 | 78.7 |
| Comparative Example 4 | 99.4 | 97.3 | 90.1 | 80.6 |

Example 6 does not form part of the present invention.

**[Table 5]**

| | Whether ignition occurred during nail penetration (Pass/Test) | Impact test | |
|---|---|---|---|
| | | Round bar average pressing width | Whether ignition occurred |
| Example 1 | 5P/6T | 6.6 mm | X |
| Example 2 | 6P/6T | 6.9mm | X |
| Example 3 | 6P/6T | 5.9 mm | X |
| Example 4 | 6P/6T | 5.8 mm | X |
| Example 5 | 6P/6T | 5.5 mm | X |
| Example 6 | 6P/6T | 6.5 mm | X |
| Example 7 | 5P/6T | 6.7 mm | X |
| Example 8 | 6P/6T | 5.4 mm | X |
| Example 9 | 6P/6T | 6.2 mm | X |
| Example 10 | 5P/6T | 9.5 mm | X |
| Comparative Example 1 | 3P/6T | 9.9 mm | X |
| Comparative Example 2 | 0P/6T | 16.6 mm | O |
| Comparative Example 3 | 4P/6T | 8.7 mm | X |
| Comparative Example 4 | 1P/6T | 12.8 mm | O |

Example 6 does not form part of the present invention.

As shown in Table 4 and Table 5, it can be seen that the lithium secondary battery according to the present invention not only has a high energy density, but also has an excellent effect of improving the safety of the battery.

Specifically, it was shown that the secondary batteries of Examples according to the present invention maintained a discharge capacity ratio of 89% or more even at a high-rate discharge of 5.0C rate or higher. This means that the output of the lithium secondary battery including the positive electrode of the Examples is excellent.

In addition, it was confirmed that ignition did not occur in the secondary battery of the Examples during the nail penetration test and the impact test. This means that the safety of the secondary battery according to the present invention is high.

From these results, it can be seen that the lithium secondary battery according to the present invention not only has an excellent energy density by containing a ternary compound containing nickel (Ni), cobalt (Co), manganese (Mn), etc. and at the same time, containing a small amount of iron phosphate compound and silicon-based oxide in the outermost part of the mixture layer adjacent to the separator in the positive electrode and the negative electrode, respectively, but also can improve safety during an internal short circuit of the secondary battery by having a relatively low electrical conductivity at the surface of the positive electrode and the surface of the negative electrode.

As described above, the present invention has been described with reference to exemplary embodiments, but it should be understood by those skilled in the art or those of ordinary skill in the art that the present invention can be variously modified and changed without departing from the technical scope of the present invention described in the accompanying claims.

Therefore, the technical scope of the present invention should not be limited to the contents described in the detailed description of the specification, but should be defined by the claims.

### [Reference Numerals]

1: LITHIUM SECONDARY BATTERY
10: NEGATIVE ELECTRODE
11: NEGATIVE ELECTRODE CURRENT COLLECTOR
12: MULTI-LAYER NEGATIVE ELECTRODE MIXTURE LAYER
121: INDIVIDUAL NEGATIVE ELECTRODE MIXTURE LAYER
121a: FIRST NEGATIVE ELECTRODE MIXTURE LAYER
121n: N^{TH} NEGATIVE ELECTRODE MIXTURE LAYER
20: POSITIVE ELECTRODE
21: POSITIVE ELECTRODE CURRENT COLLECTOR
22: MULTI-LAYER POSITIVE ELECTRODE MIXTURE LAYER
221: INDIVIDUAL POSITIVE ELECTRODE MIXTURE LAYER
221a: FIRST POSITIVE ELECTRODE MIXTURE LAYER
221m: M^{TH} POSITIVE ELECTRODE MIXTURE LAYER

## Claims

1. A lithium secondary battery (1), comprising:
a positive electrode (20);
a negative electrode (10); and
a separator disposed between the positive electrode (20) and the negative electrode (10),
wherein the negative electrode (10) comprises a negative electrode current collector (11), and a first negative electrode mixture layer (121a) to n^{th} negative electrode mixture layer (121n), wherein n is an integer of 2 or more, disposed on the negative electrode current collector (11),
wherein the first negative electrode mixture layer (121a) to n^{th} negative electrode mixture layers (121n) contain a first negative electrode active material (121a) including a carbon-based material and a second negative electrode active material including a silicon-based material,
wherein a content or a content ratio of the second negative electrode active material increases from the first negative electrode mixture layer (121a) to the n^{th} negative electrode mixture layer (121n);
**characterized in that** the second negative electrode active material has a degree of sphericity of 0.5 to 1.0, and the degree of sphericity decreases from the first negative electrode mixture layer (121a) to the n^{th} negative electrode mixture layer (121n).

2. The lithium secondary battery (1) of claim 1, wherein the carbon-based material comprises one or more of soft carbon, hard carbon, natural graphite, artificial graphite, expanded graphite, non-graphitizable carbon, carbon black, acetylene black, ketjen black, carbon nanotube, fullerene, activated carbon, graphene, or carbon fiber.

3. The lithium secondary battery (1) of claim 1, wherein the silicon-based material comprises one or more of silicon (Si), silicon carbide (SiC), or silicon oxide (SiO_{q}, wherein, 0.8≤q≤2.5).

4. The lithium secondary battery (1) of claim 1, wherein the second negative electrode active material is included in the negative electrode (10) in an amount of 1 to 20wt% based on a total weight of the first and second negative electrode active materials.

5. The lithium secondary battery (1) of claim 1, wherein a total thickness of the first to n^{th} negative electrode mixture layers (121n) is 50µm to 300µm.

6. The lithium secondary battery (1) of claim 1, wherein a thickness of the first negative electrode mixture layer (121a) is 10% to 60% of the total thickness of the first to n^{th} negative electrode mixture layers (121n).

7. The lithium secondary battery (1) of claim 1, wherein the positive electrode (20) comprises a positive electrode current collector (21), and a first positive electrode mixture layer to an m^{th} positive electrode mixture layer, wherein m is an integer of 2 or more, disposed on the positive electrode current collector (21), and
wherein the first positive electrode mixture layer (221a) to the m^{th} positive electrode mixture layer (221m) comprise a first positive electrode active material containing a lithium composite metal oxide represented by Formula 1 and a second positive electrode active material containing an iron phosphate compound represented by Formula 2 below:
[Formula 1] Liₓ[Ni_{y}Co_{z}Mn_{w}M¹ᵥ]O₂
[Formula 2] LiFeₐM²₁₋ₐXO₄
In the above Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more elements selected from the group consisting of P, Si, S, As, and Sb, and
a is 0≤a≤0.5.

8. The lithium secondary battery (1) of claim 7, wherein a content or a content ratio of the second positive electrode active material in each of the first to m^{th} positive electrode mixture layers (221m) increases from the first positive electrode mixture layer (221a) to the m^{th} positive electrode mixture layer (221m).

9. The lithium secondary battery (1) of claim 7, wherein the second positive electrode active material is included in an amount of less than 10wt% based on a total weight of the first to m^{th} positive electrode mixture layers (221m).

10. The lithium secondary battery (1) of claim 7, wherein a total thickness of the first to m^{th} positive electrode mixture layers (221m) is 50µm to 300µm.

11. A secondary battery module comprising the lithium secondary battery (1) according to claim 1.

## Patentansprüche

1. Lithium-Sekundärbatterie (1), umfassend:
eine positive Elektrode (20);
eine negative Elektrode (10); und
einen Separator, der zwischen der positiven Elektrode (20) und der negativen Elektrode (10) angeordnet ist,
wobei die negative Elektrode (10) einen Negativelektroden-Stromabnehmer (11) und eine erste Negativelektroden-Mischungsschicht (121a) bis n-te Negativelektroden-Mischungsschicht (121n), wobei n eine ganze Zahl von 2 oder mehr ist, die auf dem Negativelektroden-Stromabnehmer (11) angeordnet ist, umfasst,
wobei die erste Negativelektroden-Mischungsschicht (121a) bis n-te Negativelektroden-Mischungsschicht (121n) ein erstes Negativelektroden-Aktivmaterial (121a), das ein Material auf Kohlenstoffbasis enthält, und ein zweites Negativelektroden-Aktivmaterial, das ein Material auf Siliziumbasis enthält, enthalten,
wobei ein Gehalt oder ein Gehaltsverhältnis des zweiten Negativelektroden-Aktivmaterials von der ersten Negativelektroden-Mischungsschicht (121a) zur n-ten Negativelektroden-Mischungsschicht (121n) zunimmt;
**dadurch gekennzeichnet, dass** das zweite Negativelektroden-Aktivmaterial einen Sphärizitätsgrad von 0,5 bis 1,0 aufweist und der Sphärizitätsgrad von der ersten Negativelektroden-Mischungsschicht (121a) zur n-ten Negativelektroden-Mischungsschicht (121n) abnimmt.

2. Lithium-Sekundärbatterie (1) nach Anspruch 1, wobei das Material auf Kohlenstoffbasis eines oder mehrere von weichem Kohlenstoff, hartem Kohlenstoff, natürlichem Graphit, künstlichem Graphit, expandiertem Graphit, nicht-graphitisierbarem Kohlenstoff, Ruß, Acetylenruß, Ketjenruß, Kohlenstoff-Nanoröhrchen, Fulleren, Aktivkohle, Graphen oder Kohlenstofffaser umfasst.

3. Lithium-Sekundärbatterie (1) nach Anspruch 1, wobei das Material auf Siliziumbasis eines oder mehrere von Silizium (Si), Siliziumcarbid (SiC) oder Siliziumoxid (SiOq) umfasst, wobei 0,8≤q≤2,5).

4. Lithium-Sekundärbatterie (1) nach Anspruch 1, wobei das zweite Negativelektroden-Aktivmaterial in der negativen Elektrode (10) in einer Menge von 1 bis 20 Gew.-%, bezogen auf ein Gesamtgewicht des ersten und zweiten Negativelektroden-Aktivmaterials, enthalten ist.

5. Lithium-Sekundärbatterie (1) nach Anspruch 1, wobei eine Gesamtdicke der ersten bis n-ten Negativelektroden-Mischungsschicht (121n) 50 µm bis 300 µm beträgt.

6. Lithium-Sekundärbatterie (1) nach Anspruch 1, wobei eine Dicke der ersten Negativelektroden-Mischungsschicht (121a) 10 % bis 60 % der Gesamtdicke der ersten bis n-ten Negativelektroden-Mischungsschicht (121n) beträgt.

7. Lithium-Sekundärbatterie (1) nach Anspruch 1, wobei die positive Elektrode (20) einen Positivelektroden-Stromabnehmer (21) und eine erste Positivelektroden-Mischungsschicht bis m-te Positivelektroden-Mischungsschicht, wobei m eine ganze Zahl von 2 oder mehr ist, die auf dem Positivelektroden-Stromabnehmer (21) angeordnet ist, umfasst, und
wobei die erste Positivelektroden-Mischungsschicht (221a) bis m-te Positivelektroden-Mischungsschicht (221m) ein erstes Positivelektroden-Aktivmaterial, das ein Lithium-Verbundmetalloxid enthält, das durch Formel 1 dargestellt ist, und ein zweites Positivelektroden-Aktivmaterial, das eine Eisenphosphatverbindung enthält, die durch Formel 2 unten dargestellt ist, umfasst:
[Formel 1] Liₓ[Ni_{y}Co_{z}Mn_{w}M¹ᵥ]O₂
[Formel 2] LiFeₐM²₁₋ₐXO₄
in der obigen Formel 1 und Formel 2,
M¹ ein oder mehrere Elemente ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo,
x, y, z, w und v jeweils 1,0≤x≤1,30, 0,1≤y<1, 0≤z≤1, 0≤w≤1, 0≤v≤0,1 sind, wobei y+z+w+v=1,
M² ein oder mehrere Elemente ist, ausgewählt aus der Gruppe, bestehend aus W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B und Mo,
X ein oder mehrere Elemente ist, ausgewählt aus der Gruppe, bestehend aus P, Si, S, As und Sb, und
a 0≤a≤0,5 ist.

8. Lithium-Sekundärbatterie (1) nach Anspruch 7, wobei ein Gehalt oder ein Gehaltsverhältnis des zweiten Positivelektroden-Aktivmaterials in jeder der ersten bis m-ten Positivelektroden-Mischungsschicht (221m) von der ersten Positivelektroden-Mischungsschicht (221a) zur m-ten Positivelektroden-Mischungsschicht (221m) zunimmt.

9. Lithium-Sekundärbatterie (1) nach Anspruch 7, wobei das zweite Positivelektroden-Aktivmaterial in einer Menge von weniger als 10 Gew.-%, bezogen auf ein Gesamtgewicht der ersten bis m-ten Positivelektroden-Mischungsschicht (221m), enthalten ist.

10. Lithium-Sekundärbatterie (1) nach Anspruch 7, wobei eine Gesamtdicke der ersten bis m-ten Positivelektroden-Mischungsschicht (221m) 50 µm bis 300 µm beträgt.

11. Sekundärbatteriemodul, umfassend die Lithium-Sekundärbatterie (1) nach Anspruch 1.

## Revendications

1. Batterie rechargeable au lithium (1), comprenant :
une électrode positive (20) ;
une électrode négative (10) ; et
un séparateur disposé entre l'électrode positive (20) et l'électrode négative (10),
dans laquelle l'électrode négative (10) comprend un collecteur de courant d'électrode négative (11), et une première couche de mélange d'électrode négative (121a) à une n^{-ième} couche de mélange d'électrode négative (121n), dans laquelle n est un nombre entier de 2 ou plus, disposée sur le collecteur de courant d'électrode négative (11),
dans laquelle la première couche de mélange d'électrode négative (121a) à la n^{-ième} couche de mélange d'électrode négative (121n) contiennent un premier matériau actif d'électrode négative (121a) incluant un matériau à base de carbone et un deuxième matériau actif d'électrode négative incluant un matériau à base de silicium,
dans laquelle une teneur ou un rapport de teneur du deuxième matériau actif d'électrode négative augmente de la première couche de mélange d'électrode négative (121a) à la n^{-ième} couche de mélange d'électrode négative (121n) ;
**caractérisé en ce que** le deuxième matériau actif d'électrode négative a un degré de sphéricité de 0,5 à 1,0, et le degré de sphéricité diminue de la première couche de mélange d'électrode négative (121a) à la n^{-ième} couche de mélange d'électrode négative (121n).

2. Batterie rechargeable au lithium (1) selon la revendication 1, dans laquelle le matériau à base de carbone comprend un ou plusieurs éléments parmi du carbone mou, carbone dur, graphite naturel, graphite artificiel, graphite expansé, carbone non graphitisable, noir de carbone, noir d'acétylène, noir de Ketjen, nanotube de carbone, fullerène, charbon actif, graphène ou fibre de carbone.

3. Batterie rechargeable au lithium (1) selon la revendication 1, dans laquelle le matériau à base de silicium comprend un ou plusieurs éléments parmi du silicium (Si), carbure de silicium (SiC) ou oxyde de silicium (SiO_{q}, dans laquelle, 0,8≤q≤2,5).

4. Batterie rechargeable au lithium (1) selon la revendication 1, dans laquelle le deuxième matériau actif d'électrode négative est inclus dans l'électrode négative (10) dans une quantité de 1 à 20 % en poids sur la base d'un poids total des premier et deuxième matériaux actifs d'électrode négative.

5. Batterie rechargeable au lithium (1) selon la revendication 1, dans laquelle une épaisseur totale de la première à la n^{-ième} couche de mélange d'électrode négative (121n) est 50 µm à 300 µm.

6. Batterie rechargeable au lithium (1) selon la revendication 1, dans laquelle une épaisseur de la première couche de mélange d'électrode négative (121a) est 10 % à 60 % de l'épaisseur totale de la première à la n^{-ième} couche de mélange d'électrode négative (121n).

7. Batterie rechargeable au lithium (1) selon la revendication 1, dans laquelle l'électrode positive (20) comprend un collecteur de courant d'électrode positive (21), et une première couche de mélange d'électrode positive à une m^{-ième} couche de mélange d'électrode positive, dans laquelle m est un nombre entier de 2 ou plus, disposée sur le collecteur de courant d'électrode positive (21), et
dans laquelle la première couche de mélange d'électrode positive (221a) à la m^{-ième} couche de mélange d'électrode positive (221m) comprennent un premier matériau actif d'électrode positive contenant un oxyde métallique de lithium représenté par la Formule 1 et un deuxième matériau actif d'électrode positive contenant un composé de phosphate de fer représenté par la Formule 2 ci-dessous :
[Formule 1] Liₓ[Ni_{y}Co_{z}Mn_{w}M¹ᵥ]O₂
[Formule 2] LiFeₐM²₁₋ₐXO₄
dans la Formule 1 et la Formule 2 ci-dessus,
M¹ est un ou plusieurs éléments sélectionnés dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo,
x, y, z, w et v sont 1,0≤x≤1,30, 0,1≤y<1, 0≤z≤1, 0≤w≤1, 0≤v≤0,1, respectivement, où y+z+w+v=1,
M² est un ou plusieurs éléments sélectionnés dans le groupe constitué de W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B et Mo,
X est un ou plusieurs éléments sélectionnés dans le groupe constitué de P, Si, S, As et Sb, et
a est 0≤a≤0,5.

8. Batterie rechargeable au lithium (1) selon la revendication 7, dans laquelle une teneur ou un rapport de teneur du deuxième matériau actif d'électrode positive dans chacune de la première à la m^{-ième} couche de mélange d'électrode positive (221m) augmente à partir de la première couche de mélange d'électrode positive (221a) à la m^{-ième} couche de mélange d'électrode positive (221m).

9. Batterie rechargeable au lithium (1) selon la revendication 7, dans laquelle le deuxième matériau actif d'électrode positive est inclus dans une quantité inférieure à 10 % en poids sur la base d'un poids total de la première à la m^{-ième} couche de mélange d'électrode positive (221m).

10. Batterie rechargeable au lithium (1) selon la revendication 7, dans laquelle une épaisseur totale de la première à la m^{-ième} couche de mélange d'électrode positive (221m) est 50 µm à 300 µm.

11. Batterie rechargeable module comprenant la batterie rechargeable au lithium (1) selon la revendication 1.
